# EUROPEAN PATENT SPECIFICATION

(11) **EP 2 953 102 B1**
(45) Date of publication and mention of the grant of the patent: **13.03.2019**
(21) Application number: 15167233.4
(22) Date of filing: 11.05.2015
(51) Int. Cl.: G08B 13/24, G08B 25/10

(54) **SYSTEM AND METHOD OF MOTION DETECTION AND SECONDARY MEASUREMENTS**
SYSTEM UND VERFAHREN ZUR BEWEGUNGSDETEKTION UND FÜR SEKUNDÄRMESSUNGEN
SYSTÈME ET PROCÉDÉ DE DÉTECTION DE MOUVEMENT ET DE MESURES SECONDAIRES

(30) Priority: 02.06.2014 US 201414293517
(43) Date of publication of application: 09.12.2015
(73) Proprietor: Honeywell International Inc., Morris Plains, NJ 07950 (US)
(72) Inventor: SHEFLIN, Daniel J., Morristown, NJ New Jersey 07962-2245 (US); ADDY, Kenneth L., Morristown, NJ New Jersey 07962-2245 (US); PADMANABHAN, Aravind, Morristown, NJ New Jersey 07962-2245 (US)
(74) Representative: Houghton, Mark Phillip

(56) References cited:
- WO-A1-2013/134892
- US-A1- 2006 267 756
- US-A1- 2013 049 978

## Description

### FIELD

The application pertains to monitoring systems. More particularly, the invention pertains to such systems that can monitor selected conditions in a region, and can take into account local wireless traffic, not part of the respective monitoring system, in making a determination as to the existence of one or more predetermined conditions.

### BACKGROUND

Known security monitoring systems currently make decisions based on the inputs from security related detectors distributed around a building. These might include motion detectors, pressure mats, door contacts and the like all without limitation. Other types of signals emitted by non-system devices might contain other types of information which could be used, if accessible, advantageously by a local monitoring system.

The document US2006/267756 describes the connection of a HVAC system with a fire and intrusion monitoring system.

### SUMMARY OF THE INVENTION

The present invention provides apparatus as defined in claim 1. The system may include the features of any one or more of dependent claims 2 to 7.

### BRIEF DESCRIPTION OF THE DRAWINGS

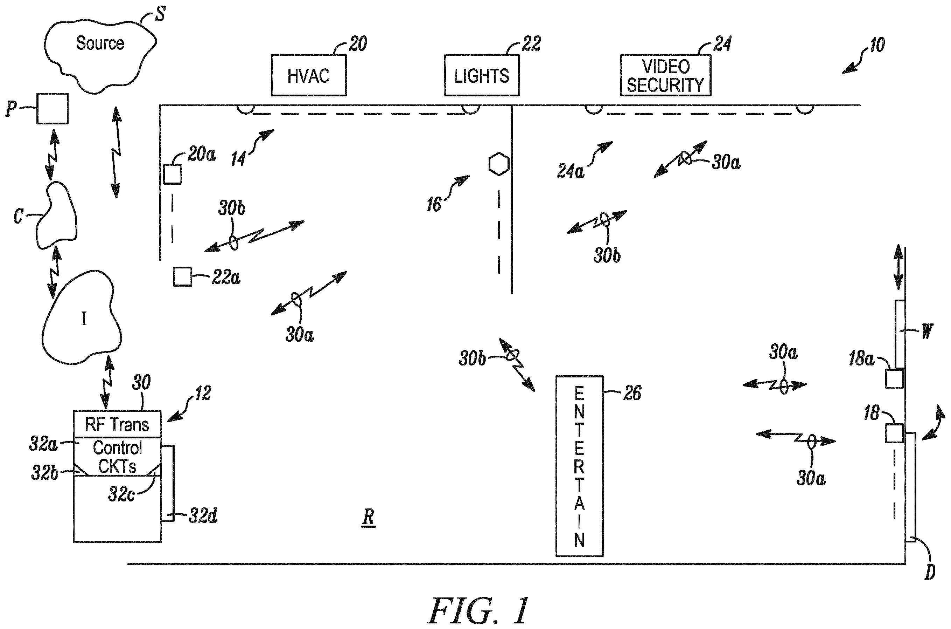

Fig. 1 illustrates a block diagram of a system in accordance herewith.

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated. The invention is defined by the appended claims.

Many commercial buildings and residences contain one or more monitoring systems. Increasingly, commercial buildings and residences include additional devices, or detectors, that include sensors that are not part of the security system. For example a motion detector in a thermostat, a camera system in a gaming console, cameras and microphones in computers, telephones, external lighting, temperature sensors, weather stations all without limitation.

Such systems, based on existing conditions are usually capable of energizing various types of actuators to unlock or close doors, or to energize camera recording systems.

Embodiments hereof improve aspects of the operation of such systems by fusing inputs from a variety of additional sensors that may not directly be part of the security system. These additional detected inputs could improve security system determinations by providing additional inputs that can be included in a decision making process.

In accordance with the above, the reliability of a detected alarm can be improved, thereby reducing false alarms. For example, information gathered from other sensors in the building or region being monitored, such as, recent historical data, along with readings for several seconds after an alarm determination has been made can be taken into account before making a decision to call first responders. In this regard, the secondary measurements, or information, could be "weighted" and combined to make a final decision.

In one aspect, since security systems are "always on" by nature, to provide 24/7 coverage, security system processing could initiate activity on other non-security networks. To improve the QOS/reliability of wi-fi alarm messages, an alarm trigger culd be used to turn-off the wi-fi activity from other devices in the region of interest. An example might be a dongle in the USB port of a router that shuts off all other traffic except streaming video from security cameras.

In another aspect, signals from non-system sources can be used as a basis for actuating security system devices, which can normally be in a low energy default state, to extend useful battery life. For example, to improve battery lifetime of wireless devices, higher current, battery powered devices, such as wireless cameras, can be placed into a very low current state until awakened by a signal from a device which is continuously powered.

The above requires an underlying wireless network with always-on nodes to collect and reformat messages into a protocol for synchronized, "paging" of mostly-off devices. An example might be to use a USB Tx/Rx plugged into a gaming system that detects/sees human activity and, in response thereto, wakes up, energizes, the wireless cameras in other parts of a home.

Additional embodiments, without limitation include, providing control of actuators by a variety of sensors that may or may not be part of the actuation system. In this regard, a CO detector which has gone into alarm can be used to turn on air conditioning and an associated fan to rapidly refresh the air in an area. Coverings, such as blinds or drapes can be closed if a room is becoming too warm due to sunlight. Alternately, in winter, if furnace is running, criteria could be incorporated to automatically close the coverings then to reduce heating expenses, or the widows can also be locked in such conditions.

In another aspect, wirelessly controlled doors, such as z-wave operated doors, can be unlocked in an alarm event. This could prevent axe damage from first responders.

Fig. 1 illustrates a block diagram of a system 10 in accordance herewith. A region R is being monitored by a monitoring system 12. Monitoring system 12 can communicate, wired or wirelessly, with a plurality of ambient condition detectors such as fire, smoke or gas detectors 14 as well as with a plurality of intrusion detectors 16 which sense motion, position or audio all as would be understood by those of skill in the art.

Monitoring system 12 can also be in wired, or wireless communications with a variety of actuators including door control, locking and unlocking, systems 18 for doors such as door D, or window locking, unlocking, opening or closing systems 18a for windows W. Other types of actuators could include fans, pumps or the like all without limitation.

It will also be understood that other types of monitoring systems such as heating ventilating air conditioning systems (HVAC) 20 (with one or more wireless thermostats 20a), lighting control systems 22, (with one or more wireless illumination sensors 22a), or video security imaging systems 24 (with cameras 24a), could also be used in the region R along with entertainment system 26.

The monitoring system 12 can include a wireless RF transceiver 30 for wireless communications 30a with the various units 14, 16, 18, where those units are part of the monitoring system 12. The transceiver 30 can also communicate directly 30b, or via the Internet I with internet enabled members of the pluralities 14, 16, 18, 18a.

Other types of systems, such as systems 20, 22, 24, 26 without limitation, in or in the vicinity of the region R are not part of the monitoring system 12. All such systems 20, 22, 24, 26 might emit wireless signals such as 30b detectable by transceiver 30. Similarly, the related wireless control units 20a, 22a could also emit detectable signals 30b.

Monitoring system 12 can also include control circuits 32a coupled to the transceiver 30. Control circuits 32a can be implemented at least in part by one or more programmable processors 32b along with executable instructions 32c. A manually operable control panel and visual display 32d can be coupled to the control circuits 32a via a wired or wireless interface.

In summary, wired or wireless signals from those members of the pluralities 14, 16, 18, that are not part of monitoring system 12, as well as other systems such as 20, 22, 24, 26 and their respective wireless control units such as 20a, 22a can be detected by system 12. These signals, can be incorporated, as discussed above into making alarm determinations, activating devices in a non-active state, or energizing actuators to open or close doors, windows, operate fans turn lights on or off, enable video cameras or the like without being part of the system 12.

In yet another aspect, the units which are not part of the local system, such as system 12, can be physically displaced from system 12. They can include internet enabled sources S or cellular-type units P which can communicate via a local cell system C. In this regard, user activity in one location can via the internet or cellular systems, such as system C, can trigger events in a different system. For example, locking an office door at work can be communicated to a home security system such as system 12, to turn on heat, lights, or report security system/video status back to a mobile phone, such as cellular unit P. Hence, remote as well as local event-actions can be responded to by a local system, such as monitoring system 12.

It is to be understood that no limitation with respect to the specific apparatus illustrated herein is intended or should be inferred. It is, of course, intended to cover by the appended claims all such modifications as fall within the scope of the claims

## Claims

1. An apparatus comprising:
a monitoring system (12) which includes a plurality of detectors, wherein said plurality of detectors comprise ambient condition detectors and intrusion detectors; and control circuits (32a) to respond to a plurality of units (20a,22a)
not part of the monitoring system (12), wherein the
said plurality of units emit wireless signals (30b) which are received by the control circuits (32a)
which, responsive thereto, at least in part, implement a function selected from a class which includes at least, one of, altering an operational element or process of the monitoring system (12),
emitting a condition indicating signal, energizing an actuator, or activating at least some of the detectors for at least intermittent operation
wherein to improve reliability of Wi-Fi alarm messages of said monitoring system ⁽¹²⁾
an alarm trigger of said monitoring system ⁽¹²⁾
turns-off Wi-Fi activity from the plurality of
units (20a, 22a).

2. An apparatus as in claim 1 wherein the detectors are selected from a class which includes at least motion detectors, PIR detectors, position detectors, glass break detectors, airborne condition detectors, temperature detectors, and lighting detectors.

3. An apparatus as in claim 1 wherein one of the control circuits (32a), or the units (20a, 22a)
emits signals to switch selected ones of the detectors from a low power inactive state to a higher power active state.

4. An apparatus as in claim 1 wherein an alarm indicating process responds to signals from at least one of the detectors and signals from the at least one unit (20a, 22a).

5. An apparatus as in claim 1 where the control circuits (32a) can monitor
local, non-security related traffic, and wherein the unit (20a,22a)
can include one or more
broadband, or cellular-type devices, displaced from the monitoring system but which can communicate with the control circuits (32a).

6. An apparatus as in claim 1 wherein an actuator can be energized in response to a signal from the at least one unit to unlock a door, change the operational state of a fan, open or close a shade or covering, lock or unlock windows.

7. An apparatus as in claim 6 wherein one of the monitoring system control circuits (32a) or the
units(20a,22a)
emits signals to switch selected ones of the detectors from a low power inactive state to a higher power active state.

8. An apparatus as in claim 7 wherein the detectors are selected from a class which includes at least motion detectors, PIR detectors, position detectors, glass break detectors, airborne condition detectors, temperature detectors, and lighting detectors.

## Patentansprüche

1. Vorrichtung, die Folgendes umfasst:
ein Überwachungssystem (12), das mehrere Detektoren enthält, wobei die mehreren Detektoren Umgebungsbedingungsdetektoren und Eindringdetektoren umfassen; und
Steuerschaltungen (32a), um auf mehrere Einheiten (20a, 22a), die nicht Teil des Überwachungssystems (12) sind, zu antworten, wobei die mehreren Einheiten drahtlose Signale (30b) ausstrahlen, die durch die Steuerschaltungen (32a) empfangen werden, die mindestens teilweise in Reaktion darauf eine Funktion implementieren, die aus einer Klasse gewählt ist, die das Ändern eines Betriebselementes oder Betriebsvorgangs des Überwachungssystems (12), das Ausstrahlen eines einen Zustand anzeigenden Signals, das Einschalten eines Aktors und/oder das Aktivieren mindestens einiger der Detektoren mindestens für einen intermittierenden Betrieb enthält, wobei
ein Alarmauslöser des Überwachungssystems (12) die Wi-Fi-Aktivität der mehreren Einheiten (20a, 22a) abschaltet, um die Verlässlichkeit von Wi-Fi-Alarmnachrichten des Überwachungssystems (12) zu verbessern.

2. Vorrichtung nach Anspruch 1, wobei die Detektoren aus einer Klasse gewählt sind, die Bewegungsdetektoren, PIR-Detektoren, Positionsdetektoren, Glasbruchdetektoren, Luftzustandsdetektoren, Temperaturdetektoren und/oder Beleuchtungsdetektoren enthält.

3. Vorrichtung nach Anspruch 1, wobei eine der Steuerschaltungen (32a) oder der Einheiten (20a, 22a) Signale aussendet, um gewählte Detektoren von einem inaktiven Zustand mit niedriger Energie zu einem aktiven Zustand mit höherer Energie umzuschalten.

4. Vorrichtung nach Anspruch 1, wobei ein Alarmanzeigevorgang auf Signale von mindestens einem der Detektoren und Signale von der mindestens einen Einheit (20a, 22a) reagiert.

5. Vorrichtung nach Anspruch 1, wobei die Steuerschaltungen (32a) lokalen, nicht sicherheitsrelevanten Verkehr überwachen können und die Einheit (20a, 22a) eine oder mehrere Breitbandeinrichtungen oder Einrichtungen vom zellularen Typ, die vom Überwachungssystem versetzt sind, die jedoch mit den Steuerschaltungen (32a) kommunizieren können, enthalten kann.

6. Vorrichtung nach Anspruch 1, wobei ein Aktor in Reaktion auf ein Signal von der mindestens einen Einheit eingeschaltet werden kann, um eine Tür zu entriegeln, den Betriebszustand eines Lüfters zu ändern, einen Rollladen oder eine Abdeckung zu öffnen oder zu schließen und Fenster zu verriegeln oder zu entriegeln.

7. Vorrichtung nach Anspruch 6, wobei eine der Überwachungssystemsteuerschaltungen (32a) oder der Einheiten (20a, 22a) Signale aussendet, um gewählte Detektoren von einem inaktiven Zustand mit niedriger Energie zu einem aktiven Zustand mit höherer Energie umzuschalten.

8. Vorrichtung nach Anspruch 7, wobei die Detektoren aus einer Klasse gewählt sind, die Bewegungsdetektoren, PIR-Detektoren, Positionsdetektoren, Glasbruchdetektoren, Luftzustandsdetektoren, Temperaturdetektoren und/oder Beleuchtungsdetektoren enthält.

## Revendications

1. Appareil, comprenant :
un système de surveillance (12) qui contient une pluralité de détecteurs, ladite pluralité de détecteurs comprenant des détecteurs de conditions ambiante et des détecteurs d'intrusion ; et
des circuits de commande (32a) servant à répondre à une pluralité d'unités (20a, 22a) qui ne font pas partie du système de surveillance (12),
les unités de ladite pluralité d'unités émettant des signaux sans fil (30b) qui sont reçus par les circuits de commande (32a) qui, en y répondant, au moins en partie, mettent en oeuvre une fonction sélectionnée dans une classe qui contient au moins l'une des suivantes : altération d'un élément ou d'un processus opérationnel du système de surveillance (12), émission d'un signal indicateur d'un état, alimentation d'un actionneur, activation d'au moins certains des détecteurs en vue d'au moins un fonctionnement intermittent,
dans lequel, afin d'améliorer la fiabilité de messages d'alarme wi-fi dudit système de surveillance (12), un déclenchement d'alarme dudit système de surveillance (12) désactive l'activité wi-fi de la pluralité d'unités (20a, 22a).

2. Appareil selon la revendication 1, dans lequel les détecteurs sont sélectionnés dans une classe qui contient au moins des détecteurs de mouvement, des détecteurs PIR, des détecteurs de position, des détecteurs de bris de glace, des détecteurs de teneur atmosphérique, des détecteurs de température et des détecteurs d'éclairage.

3. Appareil selon la revendication 1, dans lequel un des circuits de commande (32a) ou une des unités (20a, 22a) émet des signaux servant à faire passer les détecteurs sélectionnés d'un état inactif à basse puissance à un état actif à puissance plus élevée.

4. Appareil selon la revendication 1, dans lequel un processus indicateur d'alarme répond à des signaux provenant d'au moins un des détecteurs et à des signaux provenant d'au moins une unité (20a, 22a).

5. Appareil selon la revendication 1, dans lequel les circuits de commande (32a) sont capables de surveiller un trafic local sans lien avec la sécurité et dans lequel l'unité (20a, 22a) peut contenir un ou plusieurs dispositifs à large bande ou de type cellulaire, éloignés du système de surveillance mais capables de communiquer avec les circuits de commande (32a).

6. Appareil selon la revendication 1, dans lequel un actionneur peut être alimenté en réponse à un signal provenant de ladite au moins une unité pour déverrouiller une porte, modifier l'état de fonctionnement d'un ventilateur, ouvrir ou fermer un store ou un élément couvrant, verrouiller ou déverrouiller des fenêtres.

7. Appareil selon la revendication 6, dans lequel un des circuits de commande (32a) du système de surveillance ou une des unités (20a, 22a) émet des signaux servant à faire passer les détecteurs sélectionnés d'un état inactif à basse puissance à un état actif à puissance plus élevée.

8. Appareil selon la revendication 7, dans lequel les détecteurs sont sélectionnés dans une classe qui contient au moins des détecteurs de mouvement, des détecteurs PIR, des détecteurs de position, des détecteurs de bris de glace, des détecteurs de teneur atmosphérique, des détecteurs de température et des détecteurs d'éclairage.
